# EUROPEAN PATENT SPECIFICATION

(11) **EP 1 889 704 B1**
(45) Date of publication and mention of the grant of the patent: **12.11.2008**
(21) Application number: 06017227.7
(22) Date of filing: 18.08.2006
(51) Int. Cl.: B29B 9/16, C08J 3/20, C08J 3/22

(54) **Dry blend having oxygen-scavenging properties, and the use thereof for making a monolayer packaging article**
Trockene Mischung mit Sauerstoffentfernungseigenschaften, und die Verwendung für einlagige Verpackungsartikel
Mélange sec avec propriétés desoxygénantes et l'utilisation pour article d'emballage en monocouche

(43) Date of publication of application: 20.02.2008
(73) Proprietor: Amcor Limited, Abbotsford, Victoria 3067 (AU)
(72) Inventor: Krikor, Hilde, 2100 Deurne (BE); Welkenhuysen, Inge, 9300 Aalst (BE); Verheyen, Luc, 2960 Brecht (BE)
(74) Representative: Matkowska, Franck

(56) References cited:
- EP-A- 1 504 999

## Description

The present invention relates to packaging, especially packaging of oxygen-sensitive products, and more especially of food and beverages. A main object of the invention is a new dry blend that comprises polyamide pellets, and that can be used for making a packaging article exhibiting oxygen-scavenging properties. This blend is more especially suitable for making monolayer packaging articles that exhibit oxygen-scavenging properties and preferably low haze.

### Prior art

Thermoplastic polymeric compositions are widely used in the packaging industry for making various packaging articles for storing oxygen-sensitive products, such as food or beverages.

The word "packaging article" used therein refers to any article that is used for storing any material, and especially (but not only) food or beverages. For examples, a package article can be a hollow and rigid container, such as bottle, jar or the like, a flexible plastic container, a film or a sheet for a package.

More especially, a thermoplastic composition that is widely used is polyethylene terephthalate (PET). This material has a number of valuable properties for packaging, but lacks sufficient gas barrier properties for many applications. In particular because of its oxygen permeability, PET alone is not appropriate for packaging oxygen-sensitive food and beverage products such as beer, fruit juices, some carbonated soft drinks, wine, etc... PET is also permeable to carbon dioxide, which in turn leads to a short shelf life for carbonated products, such as carbonated soft drinks, stored in PET containers.

In order to improve the gas barrier properties of packaging articles, in particular oxygen and/or carbon dioxide barrier properties, it is now common to use multilayered packaging articles, and in particular multilayered containers, that include at least one barrier layer. For example, in the field of bottle packaging, a typical and common multilayered wall structure for a hollow rigid container is a three-layer wall: two internal and external layers made of PET, and one intermediate gas barrier layer sandwiched between the two PET layers.

A first known type of barrier layer is made of, or comprises, polymers that have excellent gas-barrier properties, in particular to O₂ and/or CO₂ and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) which is a poly(m-xylyleneadipamide) produced by the polycondensation of a diamine component composed mainly of m-xylylenediamine and a dicarboxylic acid component composed mainly of adipic acid, or polyamide material commercialized by company EMS-Chemie Holding AG under reference Grivory HB5793, is preferably used.

US patent 4,501,781 assigned to Yoshino Kogyosho Co, Ltd discloses a multilayered container having for example a three layer structure: an internal layer and an external layer made of PET ; an intermediate passive barrier layer that is made of a blend PET and a xylylene group-containing polyamide (preferably MXD6). The ratio of the xylylene group-containing polyamide in the blend is in the range 5wt% to 50wt%, and preferably in the range 10wt% to 30wt%.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0507207, Said polymeric compositions generally comprise and oxidizable polymer and a transition metal catalyst. In EP-A-0 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other know metal salts used for making such composition are rhodium, manganese, copper, iron.

With multilayered packaging articles having at least one gas barrier layer comprising a polyamide (e.g. MXD6) and a polyester (e.g. PET), very good results can be achieved in terms of shelf life of the packaged products. More especially when the barrier layer comprises a polyamide (e.g. MXD6), polyester (e.g. PET), and a catalyst such as a cobalt salt, the multilayered packaging article can be used for storing oxygen-sensitive products, such as beer, fruit juice, or the like. The shelf life of the packaged product widely depends of the amount of polyamide in the packaging article and of the thickness of the barrier layer.

In return, multilayer technology involves higher production costs as compared to monolayer technology. There is thus a strong need for the packaging market to have monolayer plastic packaging articles especially monolayer plastic rigid containers that exhibit high oxygen-scavenging properties.

Moreover, one major drawback of the use of a blend: polyamide/polyester, and in particular of blend : xylylene group-containing polyamide (such as MXD6)/ PET, for making a monolayer packaging article, is the formation of haze in the wall of the packaging article, due to the orientation of the blend during the process for making the article, and also the formation of a kind of pearl effect in the wall of the packaging article.

Said haze formation and pearl effect in the article wall is obviously detrimental for all the applications where it is important to have a transparent packaging article, - i.e. a packaging article whose wall has no eye-visible whitening or haze, in order to have a better appearance of the packaged product.

Said technical problem of haze formation of an oriented blend polyamide/polyester has been for example identified in US patent 6,239,210 assigned to Pechiney Emballage Flexible Europe. In particular, US patent 6,239,210 teaches that the loss of clarity is due to a change in the refractive index of the materials. The technical solution recommended in US patent 6,239, 210 in order to reduce haze is to limit the degree of orientation of the blend. More especially, in the field of making rigid multilayered containers, US patent 6,239,210 teaches to select the extrusion blow moulding process in order to achieve the required low degree of orientation, instead of the injection stretch blow moulding process that implies higher degrees of polymer orientation, and that leads to haze formation in the blend polyamide/PET.

### Objectives of the invention

A general and main objective of the invention is to propose a novel technical solution for making monolayer packaging articles having at least high oxygen-scavenging properties, and also preferably exhibiting low haze level.

A further and more particular objective of the invention is to propose a novel dry blend that can be processed for making monolayer packaging articles having at least high oxygen-scavenging properties, and also preferably exhibiting low haze level.

### Summary of the invention

A fist object of the invention is thus a novel process of making a monolayer packaging article having O₂ scavenging properties, and having the characteristics of claim 1. According to this process, a dry blend is prepared by dry blending at least:
- (A) polyamide pellets (A1) coated with at least one first transition metal catalyst (A2), and
- (C) a polyester, and the dry blend is processed in order to form the monolayer packaging article.

In a preferred embodiment, the said dry blend is prepared by dry blending at least:
- (A) polyamide pellets (A1) coated with at least one first transition metal catalyst (A2),
- (B) a second transition metal catalyst and
- (C) a polyester.

This preferred embodiment is based mainly on the new discovery that the coating of polyamide pellets is the best way to introduce the transition metal catalyst (A2) in the composition for obtained high O₂ performances, but that this coating needs to be combined and completed with the addition of extra transition metal catalyst (B) in order to obtain a sufficient level of transition metal catalyst and the required high O₂ oxygen scavenging performances.

Polyamides that are suitable for making the composition of the invention can be any homo- or copolymer of polyamide (aromatic or aliphatic polyamide). Particularly interesting polyamides are those containing groups of the formula -arylene-CH₂-NH-CO-, conveniently in -NH-CH₂-arylene-CH₂-NH-CO-alkylene-CO- units. Especially suitable arylene groups are phenylene groups, particularly m-phenylene groups, which may be alkyl-substituted and/or condensed with other unsubstituted or alkyl-substituted aromatic rings. Alkylene and alkyl groups may conveniently have from 1 to 10 carbon atoms, and may be straight-chain or branched. Especially suitable alkylene groups are n-butylene groups. More particularly, among the polyamides that can be used for making the gas barrier of the preform or container of the invention, the so-called MXD6 is the most suitable owing to the high gas barrier properties of this polyamide.

Fully aliphatic polyamides can also be used, especially those comprising -CO(CH₂)ₙCONH(CH₂)ₘNH- or -(CH₂)ₚCONH- units (n, m, and p being integers usually equal to 4, 5 or 6).

Within the scope of the invention, the wordings "polyester" or "polyester-based composition" or "polyester composition" as used therein have the same general meaning, and encompass any polymeric composition made of, or comprising, any single polymer (the polyester), any polymeric composition made of, or comprising, a copolyester, or any polymeric composition made of a polymer blend wherein at least one component is a polyester or a copolyester.

Polyester compositions that are suitable for carrying out the invention are those generally obtained through polycondensation of diols and dicarboxylic acids or esters thereof.

Among the diols suitable for carrying out the invention, one can mention : ethylene glycol, diethylene glycol, propylene glycol, 1,3-propanediol, 1,4-butanediol, 1,3-butanediol, 2,2-dimethylpropanediol, neopentyl glycol, 1,5-pentanediol, 1,2-hexanediol, 1,8-octanediol, 1,10-decanediol, 1,4-cyclohexanedimethanol, 1,5-cyclohexanedimethanol, 1,2-cyclohexanedimethanol, or mixtures thereof.

Among the dicarboxylic acids suitable for carrying out the invention, one can mention : terephthalic acid, isophthalic acid, orthophthalic acid, 2,5-naphthalene dicarboxylic acid, 2, 6-naphthalene dicarboxylic acid, 1,3-naphthalene dicarboxylic acid, 2,7-naphthalene dicarboxylic acid, methyl terephthalic acid, 4,4'-diphenyldicarboxylic acid, 2,2'-diphenyldicarboxylic acid, 4,4'-diphenylether dicarboxylic acid, 4,4'-diphenylmethanedicarboxylic acid, 4,4'- diphenylsulfonedicarboxylic acid, 4,4'-diphenylisopropylidene-dicarboxylic acid, sulfo-5-isophthalic acid, oxalic acid, succinic acid, adipic acid, sebacic acid, azelaic acid, dodecanedicarboxylic acid, dimer acid, maleic acid, fumaric acid, and all aliphatic diacids, cyclohexane dicarboxylic acid. The dicarboxylic acids can be introduced in the polycondensation medium in an esterified form, for example via methoxy or via ethoxy.

The preferred polyesters for carrying out the invention are polyethylene terephthalate (PET), homo or copolymers thereof, and mixtures thereof.

Other preferred and optional technical characteristics of the process of the invention are mentioned in the attached subclaims that depend on claim 1.

In particular, the amount of (A) is preferably at least 1wt% of the total weight of the dry blend [(A/C) or (A/B/C)] With values below 1wt% for the amount of coated polyamide pellets (A), the performances obtained in terms of O₂ scavenging properties are generally insufficient and not commercially acceptable.

In particular, the amount of (A) is preferably less than 4 wt%, and even more preferably less than 2wt% of the total weight of the dry blend [(A/C) or (A/B/C)]

In most applications where the aesthetics of the packaging article is important and wherein for example the wall of the packaging article is not hidden by a label or the like, with values higher than 2wt% for the amount of coated polyamide pellets (A), the haziness effect in the wall of the article, due to the presence of polyamide, could become unacceptable.

Even more preferably, the amount of (A) is at least equal to 1.5 wt% of the total weight of the dry blend [(A)+(B)+(C)].

In particular, the total amount of the first (A2) and where appropriate second (B) transition metal catalysts is preferably at least 1wt%, and even more preferably at least 2wt%, of the total weight of polyamide pellets (A1), and is preferably lower than 15wt% of the total weight of polyamide pellets (A1). With values below 1wt% for the total amount of transition metal catalyst [(A2) or (A2+B)], the performances obtained in terms of O₂ scavenging properties are generally insufficient and not commercially acceptable. With values higher than 15wt% for the total amount of transition metal catalyst [(A2) or (A2+B)], the O₂ scavenging properties are generally not improved and can be much worst deteriorated in some cases, especially when a second transition metal catalyst is added in the form of pellets.

Even more preferably, especially (but not only) when the second transition metal catalyst is added in the form of pellets, the total amount of the first (A2) and where appropriate second (B) transition metal catalysts is less than 11wt%, and preferably less than 6 wt%, and more preferably less than 4 wt%, of the total weight of polyamide pellets (A1).

In particular, the amount of first transition metal catalyst (A2) is at least equal to 0.05wt%, and preferably at least equal to 1wt% of the weight of polyamide pellets (A1).

Preferably, but not necessarily, the first (A2) and second (B) transition metal catalysts are the same.

Preferably, the first and where appropriate second transition metal catalysts are selected from the group: cobalt compound, rhodium compound, copper compound, iron compound.

More preferably, the first or where appropriate second transition metal catalyst is a cobalt salt, in particular cobalt stearate.

In a preferred embodiment, the step of processing the dry blend [(A/C) or (A/B/C)] in order to form the packaging article is performed in line immediately after the step of preparing the said dry blend [(A/C) or (A/B/C)].

According to this preferred embodiment, and when the final dry blend, that is processed in order to form the packaging article, is made from three batches (A), (B) and (C), two main variants can be envisaged. In a first variant, all the three batches (A), (B), and (C) of the final dry blend (A/B/C) are mixed, and the step of processing the final dry blend (A/B/C) in order to form the packaging article is performed in line immediately after this mixing step. In a second variant, a first polyamide-based dry blend (A/B) made solely from the batches (A) and (B) is first prepared and temporarily stored. Then this first dry polyamide-based blend (A/B) is transported to the site of production of the final dry blend (A/B/C), which production site can be distant from, or can have the same location than, the production site of first dry polyamide-based blend (A/B).

Preferably, but not only, the processing of the dry blend is performed by injection and stretch-blow moulding.

A second object of the invention is a dry blend having oxygen scavenging properties, and comprising : a first batch of (A) polyamide pellets (A1) coated with at least one first transition metal catalyst (A2) and preferably a second batch of a transition metal catalyst (B).

Other preferred and optional technical characteristics for this dry blend of the invention are mentioned in the attached claims.

A third object of the invention is the use of the said dry blend for making a monolayer packaging article having oxygen scavenging properties.

A fourth object of the invention is a monolayer packaging article issued from the process of the invention, or made from a dry blend of the invention and wherein :
- the packaging article is a preform or a rigid container, and/or
   - the packaging article is characterized by an O₂ dissolved ingress that is less than 1.5 ppm, after a storage period of at least 120 days, and preferably of at least 150 days, and more preferably by an O₂ dissolved ingress that is less than 1 ppm, and even more preferably less than 0.5 ppm, after a storage period of at least 120 days, and preferably of at least 150 days.

### Brief description of the drawings

The characteristics and advantages of the invention will appear more clearly on reading the following detailed description of several preferred embodiments of the invention. Said detailed description is made by way of non-exhaustive and non-limiting example, and with reference to the accompanying drawings on which:
- Figure 1 is schematic drawing of an installation that can be used for making preforms from a dry blend of the invention;
- Figure 2 is a graph with O₂ dissolved ingress curves for different examples A to F of monolayer bottles.

### Detailed description of the invention

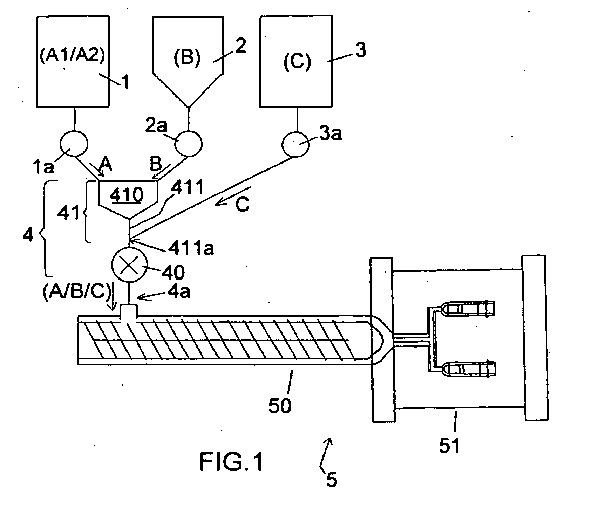

Referring to figure 1, an installation is shown that can be used for making a dry blend of the invention and for using this dry blend in order to inject monolayer articles, in particular monolayer preforms.

This installation comprises a dry blending equipment 4 directly connected to an injection equipment 5.

The injection equipment 5 comprises an injection screw 50, that is directly coupled to a multi-cavity mould 51. This injection equipment 5 is designed and used for making monolayer injected articles, and more especially monolayer preforms, from the polymeric mixture that is intensively mixed within the injection screw 50. It is readily apparent to one skilled in the art that, instead of the injection equipment 5, one can also use an injection equipment (well known in the art) comprising an intermediate injection pot that is interposed between the output of the screw and the input of the mould.

The dry blend equipment 4 comprises a mixing device 40 and a special coupling piece 41. The coupling piece 41 comprises a first smallsized cooling chamber 410 and duct 411. The cooling chamber has two separate inputs in its upper part, and one output in its lower part. The duct 411 is connecting the output of the cooling chamber 410 to the input of the mixing device 40. This connecting duct 411 also comprises an auxiliary input 411a.

The mixing device 40 is well known in the art and, and for example, comprises at least one internal rotating paddle.

The cooling of the chamber 410 is obtained, for example, by cooling the wall of the chamber with a cooling fluid, and is performed in order to maintain the inside of the cooling 410 chamber preferably around a predetermined cooling temperature.

The installation further comprises a first drying equipment 1 containing polyamide pellets A1 coated with a first transition metal catalyst A2, a hopper 2 containing a second transition metal catalyst B (in the form of pellets or in the form of powder), and a second drying equipment 3 containing polyester pellets C.

The first drying equipment 1 is connected to a first input of the cooling chamber 410 via a first dosing equipment 1a. The hopper 2 is connected to the second input of cooling chamber 410 via a second dosing equipment 2a. The second drying equipment 3 is connected to the auxiliary input 411 a of the connecting duct 411 (downstream the output of the cooling chamber 410), via a third dosing equipment 3a.

In operation, a first batch A of polyamide pellets A1 coated with a first transition metal catalyst A2 and a second batch of a second transition metal catalyst B are separately fed into the cooling chamber 410. The respective amounts of batches A and B are automatically controlled by dosing equipments 1a and 2a.

Then the cold batches A and B issued from the cooling chamber 410 and a controlled amount (third batch) of polyester pellets C issued from the second drying equipment 3 are separately fed by gravity inside the connecting duct 411, and fall inside the mixing device 40, in which they are dry blended.

The dry blend issued from the mixing device 40 is fed directly by gravity inside the injection screw 50 of the injection equipments 5.

The cooling temperature inside cooling chamber 410 is controlled in order to maintain the temperature of batches A and B below the melting point of the first A2 and second B transition metal catalysts, thereby avoiding any risk of early melting of the transition metal catalyst by the heat coming from the dried polyester pellets (C) of higher temperature, and from the injection screw 50. In the absence of such a cooling, the transition metal catalysts could melt, which would detrimentally render the material sticky.

In a first variant, the dried polyamide pellets A1 coated with the first transition metal catalyst A2 are previously and separately manufactured and stored in first drying equipment 1.

The process of forming coated pellets with an additive is well known in the art. Examples of pellets coating process are described notably in European patent application EP 0 889 074 or international patent application WO 90/04463. It will be readily apparent for one skilled in the art, that one can use any coating equipment that enables the melting of the first transition metal catalyst A2 (in the form of pellets or powder) and an intensive mixing of the first transition metal catalyst A2 in molten state with the polyamide pellets A1, in order to coat the surface of polyamide pellets A1 with the first transition metal catalyst A2 in molten state.

In another variant, the manufacturing of the coated polyamide pellets (A1/A2) could be performed in line with the manufacturing of the injected articles (preforms), the coating equipment being in that case connected to the cooling chamber 410, via the dosing equipment 1a.

### EXAMPLES

Different examples of monolayer bottles have been manufactured and tested for measuring their oxygen scavenging properties, in terms of O₂ ingress inside the bottle.

For each example, in a first step, a dry blend [(A)+(B)+(C)] and monolayer preforms obtained from this dry blend have been manufactured in a pilot installation according to figure 1. The injection equipment 5 used was a NETSTAL 1500. The temperature of the dried PET pellets of batch C at the output of drying equipment 3 was around 160°C. The temperature of the dry blend composed of batches A and B at the output of the cooling chamber 410 was maintained below 70°C.

In a second step, the preforms were biaxillay stretched in a standard way (standard stretch-blow moulding step) on a Sidel blow moulding machine SBO-1^{®}, in order to obtain stretched and blow moulded monolayer bottles.

In example A, the bottles were monolayer bottles of 500ml and 28g. In all examples B to F, the bottles were monolayer bottles of 330 ml and 21g.

The oxygen scavenging properties of the bottles of example A have been measured according to a test method called "Orbisphere" and the oxygen scavenging properties of the bottles of examples B to F have been measured according to a test method called "OxySense^{®} 101", both methods giving in practice comparable results.

### Test method "Orbisphere"

Bottles are filled brimful with deaerated water - less than 150 ppb of O₂ - and are closed with an induction sealed aluminium foil. Then they are stored at constant temperature of 22°C +/- 0.5°C. The O₂ dissolved in water is measured every 2 weeks using the orbisphere method. The general principle of the orbisphere system is based on the law of equilibrium between the gas present in the liquid and the gas phase. The equipment used is an oxygen sensor serie 311 XX with a membrane model 2958 A. The orbisphere microprocessor for O₂ measurement is the 2640 model.

Bottles are first shaken during 3 minutes then the liner is pierced by the needle of the orbisphere piercer ; the water to analyse is pushed by an inert gas - nitrogen- towards the oxygen sensor containing the membrane. O₂ concentration is then automatically calculated and displayed on the screen.

The quantity of O₂ dissolved inside the different containers produced is measured, with a predetermined frequency (for example every two weeks), in order to follow the evolution of O₂ dissolved.

### Test method: "OxySense^{®} 101".

This method is using an optical oxygen sensing measurement technique that is based on the fluorescence quenching of an Oxygen sensitive dye immobilized in a gas permeable polymer. The oxygen sensitive coating is commercially available as O₂xyDot^{™}. The dots are attached to the inside wall of the bottle to be tested and are illuminated with blue light pulses. The O₂xyDot^{™} fluoresces and emits red light which is collected via a fiber optic pen from the outside of the package and the oxygen concentration is determined by the instrument. These dots can be applied in liquids, solid and gas phase.

The testing procedure was the following:
- 5 bottles are sampled at random of the bottles to be tested
- 3 O₂xyDot^{™} dots are glued (evenly distributed) on the inside of the bottles
- Bottles are filled with de-oxygenated water (i.e N₂ purged water) with an Oxygen level < 300ppb without a headspace (i.e, brimful)
- Bottles are closed by an aluminium induction seal and a plastic closure.
- Bottles are stored at constant temperature of 22°C ± 0.5°C during the measuring period.
- The Oxygen starting level is measured on the date of filling and is then followed up as long as required.
- The frequency of measuring is pre-determined.
- The Oxygen dissolved Ingress at 22°C (ppm) is calculated by deducting the Oxygen starting level from the Oxygen level at certain storage period.

### Example A:

Batch A: Coated polyamide pellets
   Polyamide Pellets A1 were made of MDX6, grade 6007, commercialized by Mitsubishi Gas Chemical. Polyamide pellets A1 were coated with a first transition metal catalyst A2 constituted by Cobalt Stearate commercialized STEACO 9.5 by SHEPHERD CHEMICAL COMPANY. The average particle size of the pellets was between 2mm and 10mm.
   The amount of first transition metal catalyst was roughly 1wt% of the total amount of polyamide A1.
   The amount of batch A was roughly 1.7wt% of the total blend (A+B+C)
Batch B:
   Pellets of a second transition metal catalyst A2 constituted by Cobalt Stearate commercialized STEACO 9.5 by SHEPHERD CHEMICAL COMPANY. The average particle size of the pellets was between 2mm and 10mm.
   The amount of pellets A2 was roughly 0.05 wt% of the total blend (A+B+C)
Batch C :
   PET pellets commercialized by EQUIPOLYMERS under reference S98.

### Example B

The dry blend at the input of the injection screw 50 was made only of batch A and C, and thus contained no extra transition metal catalyst (no batch B).
Batch A :
   Same coated polyamide pellets than example A.
   The amount of batch A was roughly 1 wt% of the total blend (A+C)
Batch B : None
Batch C : same PET pellets than example A

### Example C

Batch A :
   Same coated polyamide pellets than example A.
   The amount of batch A was roughly equal to 1 wt% of the total blend (A+B+C)
Batch B
   Same Cobalt Stearate pellets than example A.
   The amount of pellets was roughly 0.05 wt% of the total blend (A+B+C)
Batch C : same PET pellets than example A

### Example D

Batch A :
   Same coated polyamide pellets than example A.
   The amount of batch A was roughly equal to 1 wt% of the total blend (A+B+C)
Batch B
   Same Cobalt Stearate pellets than example A.
   The amount of pellets was roughly 0.1 wt% of the total blend (A+B+C)
Batch C : same PET pellets-than example A

### Example E

Batch A : Non coated polyamide pellets
   Batch A was containing only non coated Polyamide pellets A1 made of
   MDX6, grade 6007, commercialized by Mitsubishi Gas Chemical.
   The amount of batch A was roughly equal to 1 wt% of .the total blend
   (A+B+C)
Batch B
   Same Cobalt Stearate pellets than example A.
   The amount of pellets was roughly 0.11 wt% of the total blend (A+B+C)
Batch C : same than example A

### Example F

Batch A : Coated polyamide pellets
   Same coated polyamide pellets than example A.
   The amount of batch A was roughly equal to 1 wt% of the total blend
   (A+B+C)
Batch B: Powder
   The same Cobalt Stearate material is used than the one used in example A, but in the form of powder (particle size of the powder less than 1mm).
   The amount of Cobalt Stearate powder was roughly 0.1 wt% of the total blend (A+B+C)
Batch C : same than example A

The main figures of examples A to F are summarized in table 1 below.

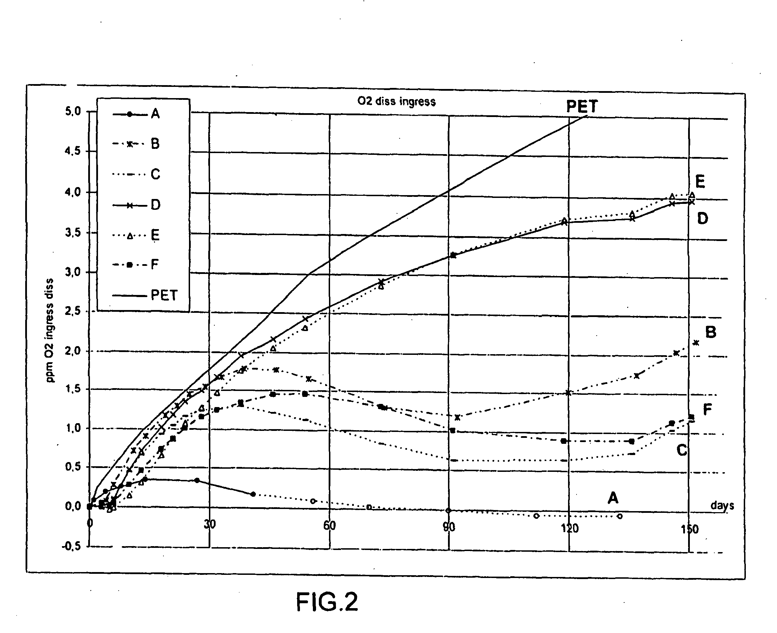

The results of the O₂ dissolved ingress measurements are shown for all examples A-F on the graph of figure 2. For comparison, on the graph of figure 2, the curve referred as "PET" is showing the evolution of O₂ dissolved ingress for standard monolayer PET bottles (330ml, 26g) measured with the Orbisphere test method.

All the bottles of examples A to F were commercially acceptable in terms of aesthetics defined by the final customer.

**Table 1 : Examples A - F**

| Ex. | Batch C | Batch A (A1 coated with A2) | | | Batch B | Cobalt Stearate | |
|---|---|---|---|---|---|---|---|
| | (PET) | A1:MXD6 | A2: Cobalt Stearate | | Cobalt Stearate | (A2+B) | |
| | C/(A+B+C) wt% | A1/(A+B+C) wt% | A2/A1 wt% | A2/(A+B+C) wt% | B/(A+B+C) wt% | (A2+B)/(A+B+C) wt% | (A2+B)/A1 wt% |
| A | 98.233 | 1.7 | 1 | 0.017 | 0.05^{(*)} | 0.067 | 3.94 |
| B | 98.99 | 1 | 1 | 0.01 | 0 | 0.01 | 1 |
| C | 98.94 | 1 | 1 | 0.01 | 0.05^{(*)} | 0.06 | 6 |
| D | 98.89 | 1 | 1 | 0.01 | 0.1^{(*)} | 0.11 | 11 |
| E | 98.89 | 1 | 0 | 0 | 0.11^{(*)} | 0.11 | 11 |
| F | 98.89 | 1 | 1 | 0,01 | 0.1^{(**)} | 0.11 | 11 |

| | | | | | | | |
|---|---|---|---|---|---|---|---|
| (*) Pellets (**) Powder | | | | | | | |

Regarding the oxygen scavenging properties results, the monolayer bottles of example A give excellent and the best performances. The O₂ dissolved ingress is advantageously below 0.5 ppm from the first day up (i.e. the scavenging effect takes place very early). For the curve of example A, measurements haven been performed for a period up to 40 days and the evolution of the curve after the 40^{th} day (in dotted lines) has been extrapolated. In all events, with the dry blend of example A, the O₂ dissolved ingress will stay below 0.5 ppm at least for a period of 150 days.

In contrast, the monolayer bottles of example D [with the higher amount of extra cobalt stearate in pellets form] and of example E [with MXD6 pellets that are not coated with Cobalt Stearate)] exhibit very poor scavenging properties and are thus not acceptable.

The monolayer bottles of example B [with no extra cobalt stearate B)] exhibit poor oxygen scavenging properties, the O₂ dissolved ingress being never bellow 1ppm, is quickly increasing after 90 days and is higher than 2ppm after 150 days. It has to be however noted that good results in terms of oxygen scavenging properties could be achieved if the amount of cobalt stearate A2 coated on the surface of the polyamide pellets A1 was increased, and in particular was higher than 1wt%, and more preferably at least 1.5wt% and even more preferably at least 2wt%, of the total weight of polyamide pellets (A1).

In between, the monolayer bottles of examples C and F give similar performances in terms of O₂ scavenging performances. After an induced period of approximately 40 days, the O₂ dissolved ingress starts to decrease (O₂ scavenging effect) and is always lower than 1.5 ppm after 150, days, and below 1 ppm after roughly 90 days, and stays below 1 ppm for a storage period up to at least 120 days. These results are not so good as example A but depending of the use of the bottles can be acceptable.

Moreover, a comparison between example F (Batch B/ Cobalt Stearate in powder form) and example D (batch B/ Cobalt Stearate in pellets form) shows that surprisingly the granulometry of the transition metal catalyst in the second batch B has also an impact on the O₂ scavenging properties. Better O₂ scavenging performances are achieved with particles having a smaller size (powder) for the second transition metal catalyst.

Although examples A to F are directed to the manufacture of monolayer bottles, obtained by injection and stretch blow moulding it must be underlined that the scope of the invention is not limited to that particular application but encompasses the use of the dry blend of the invention for forming any kind of monolayer packaging article, having O₂ scavenging properties, and that can be used more especially for storing oxygen-sensitive products.

For example, one can use the dry blend of the invention for making a packaging article (flexible or rigid), and in particular any type of container, by any other known technique, and for example by using the extrusion blow moulding technique. One can also use the dry blend of the invention for making flexible films or sheets.

In operation of the installation of figure 1, the step of processing the dry blend (A/B/C) in order to form the packaging article is advantageously and preferably performed in line immediately after the step of preparing the said dry blend (A/B/C). The mixing of all the batches (A), (B) and (C) can be performed in line with the injection step (as shown on figure 1). In another variant however, a first polyamide-based dry blend (A/B) made solely from the batches (A) and (B) can be first prepared and temporarily stored. Then this first dry polyamide-based blend (A/B) can be transported to the site of production of the final dry blend (A/B/C), which production site can be distant from, or can have the same location than, the production site of first dry polyamide-based blend (A/B).

Moreover, in another variant of the invention, the dry blend (A/B/C) could be also prepared, stored temporarily, and eventually transported to another production site, and then processed in order to form the packaging article.

Moreover, it will be readily apparent to one skilled in the art that cobalt stearate can be replaced by any transition metal catalyst known in the art for achieving O₂ scavenging properties when mixed with polyamide. In particular, the first and second transition metal catalysts can be selected from the group : cobalt compound, rhodium compound, copper compound, iron compound. The first A2 and second B transition metal catalysts are not necessary the same but can also be different materials.

It will be readily apparent to one skilled in the art, that in the dry blend of the invention, other additives can be also added such as, for example, additives like lubricant for improving the processability of the blend, colorant(s), mineral fillers, UV stabilizers,...

## Claims

1. A process of making a monolayer packaging article having O₂ scavenging properties, and wherein a dry blend is prepared by dry blending at least :
- (A) polyamide pellets (A1) coated with at least one first transition metal catalyst (A2), and
- (C) a polyester,
and the dry blend is processed in order to form the monolayer packaging article.

2. The process of claim 1, wherein the said dry blend is prepared by dry blending at least :
- (A) polyamide pellets (A1) coated with at least one first transition metal catalyst (A2),
- (B) a second transition metal catalyst and
- (C) a polyester.

3. The process of claim 1 or 2 wherein the amount of (A) is at least 1wt% of the total weight of the dry blend [(A/C) or (A/B/C)].

4. The process of any one of claims 1 to 3 wherein the amount of (A) is less than 4wt%, and preferably less than 2wt%, of the total weight of the dry blend [(A/C) or (A/B/C)].

5. The process of any one of claims 1 to 4, wherein the total amount of transition metal catalyst [(A2) or (A2)+(B)] is at least 1wt%, and more preferably at least 2wt%, of the total weight of polyamide pellets (A1).

6. The process of any one of claims 1 to 5, wherein the total amount of transition metal catalyst catalyst [(A2) or (A2)+(B)] is at lower than 15wt% of the total weight of polyamide pellets (A1).

7. The process of any one of claims 1 to 6, wherein the total amount of transition metal catalyst [(A2) or (A2)+(B)] is less than 11wt%, and preferably less than 6 wt%, and more preferably less than 4 wt%, of the total weight of polyamide pellets (A1).

8. The process of any one of claims 1 to 7, wherein the amount of (A) is at least equal to 1.5 wt% of the total weight of the dry blend [(A/C) or (A/B/C)].

9. The process of any one of claims 1 to 8, wherein the amount of first transition metal catalyst (A2) is at least equal to 0.05wt% ,and preferably at least equal to 1wt% of the weight of polyamide pellets (A1).

10. The process of claims 2 to 9, wherein the second transition metal catalyst (B) is in powder form.

11. The process of claims 2 to 9, wherein the second transition metal catalyst (B) is constituted by pellets.

12. The process of claims 2 to 11, wherein the first (A2) and second (B) transition metal catalysts are the same.

13. The process of any one of claims 1 to 12, wherein the first and where appropriate second transition metal catalysts are selected from the group: cobalt compound, rhodium compound, copper compound, iron compound.

14. The process of claim 13, wherein the first or where appropriate second transition metal catalyst is a cobalt salt.

15. The process of claim 14, wherein the cobalt salt is cobalt stearate.

16. The process of any one of claims 1 to 15, wherein the polyamide (A1) is a xylylene group containing polyamide.

17. The process of any one of claims 1 to 16, wherein the polyester (C) is constituted by a homo- or copolymer of PET.

18. The process of any one of claims 1 to 17, wherein the step of processing the dry blend [(A/C)or (A/B/C)] in order to form the packaging article is performed in line immediately after the step of preparing the said dry blend [(A/C) or (A/B/C)].

19. The process of any one of claims 1 to 18, wherein the processing of the dry blend is performed by injecting the dry blend [(A/C) or (A/B/C)] in a mould.

20. The process of any one of claims 1 to 18, wherein the processing of the dry blend [(A/C) or (A/B/C)] is performed by injection and stretch-blow moulding.

21. A dry blend having oxygen scavenging properties, and comprising at least a first batch of (A) polyamide pellets (A1) coated with at least one first transition metal catalyst (A2).

22. The dry blend of claim 21, further comprising a second batch of a transition metal catalyst (B).

23. The dry blend of claim 21 or 22, wherein the total amount of transition metal catalyst [(A2) or (A2)+(B)] is at least 1wt%, and preferably at least 2wt%, of the total weight of polyamide pellets (A1).

24. The dry blend of any one of claims 21 to 23, wherein the total amount of transition metal catalyst [(A2) or (A2)+(B)] is lower than 15wt% of the total weight of polyamide pellets (A1).

25. The dry blend of claim 24, wherein the total amount of transition metal catalyst [(A2) or (A2)+(B)] is less than 11wt%, and preferably less than 6 wt%, and more preferably less than 4 wt% of the total weight of polyamide pellets (A1).

26. The dry blend of any one of claims 21 to 25, wherein the amount of first transition metal catalyst (A2) is at least equal to 0.05wt%, and preferably at least equal to 1wt% of the weight of polyamide pellets (A1).

27. The dry blend of any one of claims 21 to 26, and further comprising a third batch (C) of polyester pellets.

28. The dry blend of claim 27, wherein the amount of first batch (A) is at least 1wt% of the total weight of the dry blend [(A/C) or (A/B/C)].

29. The dry blend of claim 27 or 28, wherein the amount of first batch (A) is less than 4wt%, and preferably less than 2wt%, of the total weight of the dry blend [(A/C) or (A/B/C)].

30. The dry blend of any one of claims 27 to 29, wherein the amount of (A) is at least equal to 1.5 wt% of the total weight of the dry blend [(A/C) or (A/B/C)].

31. The dry blend of any one of claims 27 to 30, wherein the pellets of third batch (C) are made of homo- or copolymer of PET.

32. The dry blend of any one of claims 22 to 31, wherein the second transition metal catalyst (B) is in powder form.

33. The dry blend of any one of claims 22 to 31, wherein the second transition metal catalyst (B) is constituted by pellets.

34. The dry blend any one of claims 22 to 33, wherein the transition metal catalysts (A2) and (B) of the first and second batches are the same.

35. The dry blend of any one of claims 21 to 34, the first (A2) and where appropriate second (B) transition metal catalysts are selected from the group: cobalt compound, rhodium compound, copper compound, iron compound.

36. The dry blend of claim 35, wherein the transition metal catalyst (A2) the first batch or where appropriate the transition metal catalyst (B) of the second batch is a cobalt salt.

37. The dry blend of claim 36, wherein the cobalt salt is cobalt stearate.

38. The dry blend of any one of claims 21 to 37, wherein the polyamide is a xylylene group containing polyamide.

39. Use of the dry blend of any one of claims 21 to 38 for making a monolayer packaging article having oxygen scavenging properties.

40. A monolayer packaging article issued from the process of any one of claims 1 to 20, or made from a dry blend of any one of claims 21 to 38, and wherein the packaging article is a preform or a rigid container.

41. A monolayer packaging article issued from the process of any one of claims 1 to 20, or made from a dry blend of any one of claims 21 to 38, and **characterized by** an O₂ dissolved ingress that is less than 1.5 ppm, after a storage period of at least 120 days, and preferably of at least 150 days.

42. The packaging article of claim 41, **characterized by** an O₂ dissolved ingress that is less than 1 ppm, and more preferably less than 0.5ppm, after a storage period of at least 120 days, and preferably of at least 150 days.

## Patentansprüche

1. Verfahren zur Herstellung eines einschichtigen Verpackungsartikels mit O₂-Scavenging-Eigenschaften, bei dem eine Trockenmischung vorbereitet wird durch Trockenmischen von wenigstens:
- (A) Polyamidpellets (A1), beschichtet mit wenigstens einem ersten Übergangsmetallkatalysator (A2), und
- (C) einem Polyester,
und die Trockenmischung verarbeitet wird, um den einschichtigen Verpackungsartikel auszubilden.

2. Verfahren nach Anspruch 1, **dadurch gekennzeichnet, dass** die Trockenmischung zubereitet wird durch Trockenmischen von wenigstens:
- (A) Polyamidpellets (A1), beschichtet mit wenigstens einem ersten Übergangsmetallkatalysator (A2),
- (B) einem zweiten Übergangsmetallkatalysator und
- (C) eine Polyester.

3. Verfahren gemäß Anspruch 1 oder 2, **dadurch gekennzeichnet, dass** die Menge von (A) wenigstens 1 Gew.% des Gesamtgewichtes der Trockenmischung [(A/C) oder (A/B/C)] beträgt.

4. Verfahren nach einem der Ansprüche 1 bis 3, **dadurch gekennzeichnet, dass** die Menge von (A) weniger als 4 Gew.% und vorzugsweise weniger als 2 Gew.% des Gesamtgewichts der Trockenmischung [(A/C) oder (A/B/C)] beträgt.

5. Verfahren nach einem der Ansprüche 1 bis 4, **dadurch gekennzeichnet, dass** die Gesamtmenge des Übergangsmetallkatalysators [(A2) oder (A2)+(B)] wenigstens 1 Gew.% und bevorzugter wenigstens 2 Gew.% des Gesamtgewichts der Polyamidpellets (A1) beträgt.

6. Verfahren nach einem der Ansprüche 1 bis 5, **dadurch gekennzeichnet, dass** das Gesamtgewicht des Übergangsmetallkatalysators [(A2) oder (A2)+(B)] weniger als 15 Gew.% des Gesamtgewichts der Polyamidpellets (A1) beträgt.

7. Verfahren nach einem der Ansprüche 1 bis 6, **dadurch gekennzeichnet, dass** die Gesamtmenge des Übergangsmetallkatalysators [(A2) oder (A2)+(B)] weniger als 11 Gew.%, vorzugsweise weniger als 6 Gew.-% und bevorzugter weniger als 4 Gew.% des Gesamtgewichts der Polyamidpellets (A1) beträgt.

8. Verfahren nach einem der Ansprüche 1 bis 7, **dadurch gekennzeichnet, dass** die Menge von (A) wenigstens 1,5 Gew.% des Gesamtgewichts der Trockenmischung [(A/C) oder (A/B/C)] beträgt.

9. Verfahren nach einem der Ansprüche 1 bis 8, **dadurch gekennzeichnet, dass** die Menge des ersten Übergangsmetallkatalysators (A2) wenigstens 0,05 Gew.% und vorzugsweise wenigstens 1 Gew.% des Gewichts der Polyamidpellets (A1) beträgt.

10. Verfahren nach einem der Ansprüche 2 bis 9, **dadurch gekennzeichnet, dass** der zweite Übergangsmetallkatalysator (B) in Pulverform vorliegt.

11. Verfahren nach einem der Ansprüche 2 bis 9, **dadurch gekennzeichnet, dass** der zweite Übergangsmetallkatalysator (B) in Form von Pellets ausgebildet ist.

12. Verfahren nach einem der Ansprüche 2 bis 11, **dadurch gekennzeichnet, dass** der erste (A2) und zweite (B) Übergangsmetallkatalysator gleich sind.

13. Verfahren nach einem der Ansprüche 1 bis 12, **dadurch gekennzeichnet, dass** der erste und falls zweckmäßig der zweite Übergangsmetallkatalysator ausgewählt sind aus der Gruppe: Kobaltverbindung, Rhodiumverbindung, Kupferverbindung, Eisenverbindung.

14. Verfahren nach Anspruch 13, **dadurch gekennzeichnet, dass** der erste und falls zweckmäßig der zweite Übergangsmetallkatalysator ein Kobaltsalz ist.

15. Verfahren nach Anspruch 14, **dadurch gekennzeichnet, dass** das Kobaltsalz Kobaltstearat ist.

16. Verfahren nach allen Ansprüchen 1 bis 15, **dadurch gekennzeichnet, dass** das Polyamid (A1) ein eine Xylengruppe aufweisendes Polyamid ist.

17. Verfahren nach einem der Ansprüche 1 bis 16, **dadurch gekennzeichnet, dass** der Polyester (C) durch ein Homo- oder Copolymer von PET gebildet ist.

18. Verfahren nach einem der Ansprüche 1 bis 17, **dadurch gekennzeichnet, dass** der Schritt des Verarbeitens der Trockenmischung [(A/C) oder (A/B/C)] zum Ausbilden des Verpackungsartikels in Reihe unmittelbar nach dem Schritt des Zubereitens der Trockenmischung [(A/C) oder (A/B/C)] durchgeführt wird.

19. Verfahren nach einem der Ansprüche 1 bis 18, **dadurch gekennzeichnet, dass** die Verarbeitung der Trockenmischung durch Einspritzen der Trockenmischung [(A/C) oder (A/B/C)] in eine Form durchgeführt wird.

20. Verfahren nach einem der Ansprüche 1 bis 18, **dadurch gekennzeichnet, dass** die Verarbeitung der Trockenmischung [(A/C) oder (A/B/C)] durch Einspritzen und Ziehblasformen durchgeführt wird.

21. Trockenmischung mit Sauerstoff-Scavenging-Eigenschaften, aufweisend wenigstens eine erste Menge von (A) Polyamidpellets (A1), beschichtet mit wenigstens einem ersten Übergangsmetallkatalysator (A2).

22. Trockenmischung nach Anspruch 21, des Weiteren aufweisend eine zweite Menge eines Übergangsmetallkatalysators (B).

23. Trockenmischung nach Anspruch 21 oder 22, **dadurch gekennzeichnet, dass** die Gesamtmenge des Übergangsmetallkatalysators [(A2) oder (A2)+(B)] wenigstens 1 Gew.% und vorzugsweise wenigstens 2 Gew.% des Gesamtgewichts der Polyamidpellets (A1) beträgt.

24. Trockenmischung nach einem der Ansprüche 21 bis 23, **dadurch gekennzeichnet, dass** die Gesamtmenge des Übergangsmetallkatalysators [(A2) oder (A2)+(B)] weniger als 15 Gew.% des Gesamtgewichts der Polyamidpellets (A1) beträgt.

25. Trockenmischung nach Anspruch 24, **dadurch gekennzeichnet, dass** die Gesamtmenge des Übergangsmetallkatalysators [(A2) oder (A2)+(B)] weniger als 11 Gew.%, vorzugsweise weniger als 6 Gew.% und bevorzugter weniger als 4 Gew.% des Gesamtgewichts der Polyamidpellets (A1) beträgt.

26. Trockenmischung nach einem der Ansprüche 21 bis 25, **dadurch gekennzeichnet, dass** die Menge des ersten Übergangsmetallkatalysators (A2) wenigstens 0,05 Gew.% und vorzugsweise wenigstens 1 Gew.% des Gewichtes der Polyamidpellets (A1) beträgt.

27. Trockenmischung nach einem der Ansprüche 21 bis 26, des Weiteren aufweisend eine dritte Menge (C) an Polyesterpellets.

28. Trockenmischung nach Anspruch 27, **dadurch gekennzeichnet, dass** die Menge der ersten Menge (A) wenigstens 1 Gew.% des Gesamtgewichts der Trockenmischung [(A/C) oder (A/B/C)] beträgt.

29. Trockenmischung nach Anspruch 27 oder 28, **dadurch gekennzeichnet, dass** die Menge der ersten Menge (A) weniger als 4 Gew.-% und vorzugsweise weniger als 2 Gew.% des Gesamtgewichts der Trockenmischung [(A/C) oder (A/B/C)] beträgt.

30. Trockenmischung nach einem der Ansprüche 27 bis 29, **dadurch gekennzeichnet, dass** die Menge von (A) wenigstens 1,5 Gew.% des Gesamtgewichts der Trockenmischung [(A/C) oder (A/B/C)] beträgt.

31. Trockenmischung nach einem der Ansprüche 27 bis 30, **dadurch gekennzeichnet, dass** die Pellets der dritten Menge (C) aus einem Homo- oder Copolymer von PET bestehen.

32. Trockenmischung nach einem der Ansprüche 22 bis 31, **dadurch gekennzeichnet, dass** der zweite Übergangsmetallkatalysator (B) in Pulverform vorliegt.

33. Trockenmischung nach einem der Ansprüche 22 bis 31, **dadurch gekennzeichnet, dass** der zweite Übergangsmetallkatalysator (B) in Form von Pellets ausgebildet ist.

34. Trockenmischung nach einem der Ansprüche 22 bis 33, **dadurch gekennzeichnet, dass** die Übergangsmetallkatalysatoren (A2) und (B2) der ersten und zweiten Mengen gleich sind.

35. Trockenmischung nach einem der Ansprüche 21 bis 34, wobei der erste (A2) und falls zweckmäßig der zweite (B) Übergangsmetallkatalysator ausgewählt sind aus der Gruppe: Kobaltverbindung, Rhodiumverbindung, Kupferverbindung, Eisenverbindung.

36. Trockenmischung nach Anspruch 35, **dadurch gekennzeichnet, dass** der Übergangsmetallkatalysator (A2) der ersten Menge oder falls zweckmäßig der Übergangsmetallkatalysator (B) der zweiten Menge ein Kobaltsalz ist.

37. Trockenmischung nach Anspruch 36, **dadurch gekennzeichnet, dass** das Kobaltsalz Kobaltstearat ist.

38. Trockenmischung nach einem der Ansprüche 21 bis 37, **dadurch gekennzeichnet, dass** das Polyamid ein eine Xylengruppe aufweisendes Polyamid ist.

39. Verwendung der Trockenmischung nach einem der Ansprüche 21 bis 38 zur Herstellung eines einschichtigen Verpackungsartikels mit Sauerstoff-Scavenging-Eigenschaften.

40. Einschichtiger Verpackungsartikel hergestellt mittels des Verfahrens nach einem der Ansprüche 1 bis 20 oder hergestellt aus einer Trockenmischung nach einem der Ansprüche 21 bis 38, wobei der Verpackungsartikel eine Preform oder ein fester Behälter ist.

41. Einschichtiger Verpackungsartikel hergestellt mittels des Verfahrens nach einem der Ansprüche 1 bis 20 oder hergestellt aus einer Trockenmischung nach einem der Ansprüche 21 bis 38, **dadurch gekennzeichnet, dass** ein Zufluss von gelöstem O₂ weniger als 1,5 ppm nach einer Lagerdauer von wenigstens 120 Tagen und vorzugsweise von wenigstens 150 Tagen beträgt.

42. Verpackungsartikel nach Anspruch 41, **dadurch gekennzeichnet, dass** ein Zufluss von gelöstem O₂ weniger als 1 ppm und vorzugsweise weniger als 0,5 ppm nach einer Lagerdauer von wenigstens 120 Tagen und vorzugsweise von wenigstens 150 Tagen beträgt.

## Revendications

1. Un procédé de fabrication d'un article d'emballage monocouche ayant des propriétés désoxygénantes, et dans lequel un mélange sec est préparé en mélangeant à sec au moins :
- (A) des granules de polyamide (A1) recouvertes avec au moins un premier catalyseur à métal de transition (A2), et
- (C) un polyester,
et le mélange sec est transformé en sorte de former l'article d'emballage monocouche.

2. Procédé selon la revendication 1, dans lequel ledit mélange sec est préparé en mélangeant à sec au moins :
- (A) des granules de polyamide (A1) recouvertes avec au moins un premier catalyseur à métal de transition (A2),
- (B) un deuxième catalyseur des métaux de transition et
- (C) un polyester.

3. Procédé selon la revendication 1 ou 2, dans lequel la quantité en poids de (A) représente au moins 1% du poids total du mélange sec [(A/C) ou (A/B/C)].

4. Procédé selon l'une quelconque des revendications 1 à 3, dans lequel la quantité en poids de (A) représente moins de 4%, et de préférence moins de 2% du poids total du mélange sec [(A/C) ou (A/B/C)].

5. Procédé selon l'une quelconque des revendications 1 à 4, dans lequel la quantité totale en poids de catalyseur à métal de transition [(A2) ou (A2)+(B)] représente au moins 1%, et de préférence 2%, du poids total des granules de polyamide (A1).

6. Procédé selon l'une quelconque des revendications 1 à 5, dans lequel la quantité totale en poids de catalyseur à métal de transition [(A2) ou (A2)+(B)] représente moins de 15% du poids total des granules de polyamide (A1).

7. Procédé selon l'une quelconque des revendications 1 à 6, dans lequel la quantité totale en poids de catalyseur à métal de transition [(A2) ou (A2)+(B)] représente moins de 11 %, et de préférence moins de 6%, et plus préférablement moins de 4%, du poids total des granules de polyamide (A1).

8. Procédé selon l'une quelconque des revendications 1 à 7, dans lequel la quantité en poids de (A) est au moins égale à 1,5% du poids total du mélange sec [(A/C) ou (A/B/C)].

9. Procédé selon l'une quelconque des revendications 1 à 8, dans lequel la quantité en poids du premier catalyseur à métal de transition (A2) est au moins égale à 0,05%, et de préférence au moins égale à 1% du poids des granules de polyamide (A1).

10. Procédé selon l'une quelconque des revendications 2 à 9, dans lequel le deuxième catalyseur à métal de transition (B) est sous forme poudreuse.

11. Procédé selon l'une quelconque des revendications 2 à 9, dans lequel le deuxième catalyseur à métal de transition (B) est constitué de granules.

12. Procédé selon l'une quelconque des revendications 2 à 11, dans lequel les premier (A2) et le deuxième (B) catalyseurs à métal de transition sont les mêmes.

13. Procédé selon l'une quelconque des revendications 1 à 12, dans lequel le premier et le cas échéant le deuxième catalyseur à métal de transition sont choisis parmi le groupe suivant : un composé cobalt, un composé rhodium, un composé cuivré, un composé ferreux.

14. Procédé selon la revendication 13, dans lequel le premier ou le cas échéant le deuxième catalyseur à métal de transition est un sel de cobalt.

15. Procédé selon la revendication 14, dans lequel le sel de cobalt est un stéarate de cobalt.

16. Procédé selon l'une quelconques des revendications 1 à 15, dans lequel le polyamide (A1) est un polyamide à base de groupes xylylène.

17. Procédé selon l'une quelconques des revendications 1 à 16, dans lequel le polyester (C) est constitué par un homo ou un copolymère de PET.

18. Procédé selon l'une quelconques des revendications 1 à 17, dans lequel l'étape de transformation du mélange sec [(A/C) ou (AB/C)] en sorte de former l'article d'emballage est réalisée en ligne immédiatement après l'étape de préparation dudit mélange sec [(A/C) ou (A/B/C)].

19. Procédé selon l'une quelconques des revendications 1 à 18, dans lequel la transformation du mélange sec est réalisée en injectant le mélange sec [(A/C) ou (A/B/C)] dans un moule.

20. Procédé selon l'une quelconques des revendications 1 à 18, dans lequel la transformation du mélange sec [(A/C) ou (A/B/C)] est réalisée par injection et moulage par étirage-soufflage.

21. Un mélange sec ayant des propriétés désoxygénantes, et comprenant au moins un premier lot (A) de granules de polyamide (A1) recouvertes avec au moins d'un premier catalyseur à métal de transition (A2).

22. Mélange sec selon la revendication 21, comprenant en outre un deuxième lot d'un catalyseur à métal de transition (B).

23. Mélange sec selon la revendication 21 ou 22, dans lequel la quantité totale en poids de catalyseur à métal de transition [(A2) ou (A2)+(B)] représente au moins 1%, et de préférence au moins 2%, du poids total des granules de polyamide (A1).

24. Mélange sec selon l'une quelconque des revendications 21 à 23, dans lequel la quantité totale en poids de catalyseur à métal de transition [(A2) ou (A2)+(B)] est inférieure à 15% du poids total des granules de polyamide (A1).

25. Mélange sec selon la revendication 24, dans lequel la quantité totale en poids de catalyseur à métal de transition [(A2) ou (A2)+(B)] représente moins de 11%, et de préférence moins de 6%, et plus préférablement moins de 4% du poids total des granules de polyamide (A1).

26. Mélange sec selon l'une quelconque des revendications 21 à 25, dans lequel la quantité en poids du premier catalyseur à métal de transition (A2) est au moins égale à 0,05%, et de préférence au moins égale à 1% du poids des granules de polyamide (A1).

27. Mélange sec selon l'une quelconque des revendications 21 à 26, et comprenant en outre un troisième lot (C) de granules de polyester.

28. Mélange sec selon la revendication 27, dans lequel la quantité en poids de premier lot (A) représente au moins 1% du poids total du mélange sec [(A/C) ou (A/B/C)].

29. Mélange sec selon la revendication 27 ou 28, dans lequel la quantité en poids du premier lot (A) représente moins de 4%, et de préférence moins de 2%, du poids total du mélange sec [(A/C) ou (A/B/C)].

30. Mélange sec selon l'une quelconque des revendications 27 à 29, dans lequel la quantité en poids de (A) est au moins égale à 1, 5% du poids total du mélange sec [(A/C) ou (A/B/C)].

31. Mélange sec selon l'une quelconque des revendications 27 à 30, dans lequel les granules du troisième lot (C) sont faites à partir d'homo ou de copolymère de PET.

32. Mélange sec selon l'une quelconque des revendications 22 à 31, dans lequel le second catalyseur à métal de transition (B) est sous forme poudreuse.

33. Mélange sec selon l'une quelconque des revendications 22 à 31, dans lequel le second catalyseur à métal de transition (B) est constitué de granules.

34. Mélange sec selon l'une quelconque des revendications 22 à 33, dans lequel les catalyseurs à métal de transition (A2) et (B) des premier et deuxième lots sont les mêmes.

35. Mélange sec selon l'une quelconque des revendications 21 à 34, dans lequel le premier (A2) et le cas échéant deuxième (B) catalyseur à métal de transition (B) sont choisis parmi le groupe : composé cobalt, composé rhodium, composé cuivré, composé ferreux.

36. Mélange sec selon la revendication 35, dans lequel le catalyseur à métal de transition (A2) du premier lot ou le cas échéant le catalyseur à métal de transition (B) du deuxième lot est un sel de cobalt.

37. Le mélange sec selon la revendication 36, dans lequel le sel de cobalt est un stéarate de cobalt.

38. Mélange sec selon l'une quelconques des revendications 21 à 37, dans lequel le polyamide est un polyamide à base de groupes xylylène.

39. Utilisation du mélange sec selon l'une quelconque des revendications 21 à 38 pour fabriquer un article d'emballage monocouche ayant des propriétés désoxygénantes.

40. Un article d'emballage monocouche issu du procédé selon l'une quelconque des revendications 1 à 20, ou fabriqué à partir d'un mélange sec selon l'une quelconque des revendications 21 à 38, et dans lequel l'article d'emballage est une préforme ou un récipient rigide.

41. Un article d'emballage monocouche issu du procédé selon l'une quelconque des revendications 1 à 20, ou fabriqué à partir d'un mélange sec selon l'une quelconque des revendications 21 à 38, et **caractérisé par** une quantité d'O₂ dissout ayant pénétré dans l'article d'emballage qui est inférieure à 1,5 ppm, après une période de stockage d'au mois 120 jours, et de préférence d'au moins 150 jours.

42. Article d'emballage selon la revendication 41, **caractérisé par** une quantité d'O₂ dissout ayant pénétré dans l'article d'emballage qui est inférieure à 1 ppm, et de préférence inférieur à 0,5 ppm, après une période de stockage d'au mois 120 jours, et de préférence d'au moins 150 jours.
